(19) Europäisches Patentamt / European Patent Office / Office européen des brevets

(11) **EP 3 916 370 B1**

(12) **EUROPEAN PATENT SPECIFICATION**

(45) Date of publication and mention
of the grant of the patent:
**01.05.2024 Bulletin 2024/18**

(21) Application number: **20465529.4**

(22) Date of filing: **29.05.2020**

(51) International Patent Classification (IPC):
**G01K 7/38** *(2006.01)* **B60C 23/20** *(2006.01)*

(52) Cooperative Patent Classification (CPC):
**G01K 7/38; B60C 23/20**

(54) **TYRE TEMPERATURE SENSOR, SYSTEM AND METHOD OF MEASURING A TEMPERATURE OF A PNEUMATIC TYRE**

REIFENTEMPERATURSENSOR, SYSTEM UND VERFAHREN ZUR MESSUNG DER TEMPERATUR EINES LUFTREIFENS

CAPTEUR DE TEMPÉRATURE DE PNEU, SYSTÈME ET PROCÉDÉ DE MESURE DE LA TEMPÉRATURE D'UN PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.12.2021 Bulletin 2021/48**

(73) Proprietor: **Continental Automotive Technologies GmbH**
**30175 Hannover (DE)**

(72) Inventor: **Cimponeriu, Andrei-Stefan, Dr.**
**81737 München (DE)**

(74) Representative: **Continental Corporation**
**c/o Continental Automotive GmbH**
**Intellectual Property**
**Postfach 83 01 16**
**81701 München (DE)**

(56) References cited:
**EP-A1- 1 508 790     WO-A1-2015/083072**
**US-B1- 9 417 292**

## Description

The invention relates to a tyre temperature sensor, a system and a method of measuring a temperature of a pneumatic tyre, in particular a tyre local temperature sensor, a system and a method of measuring a local temperature of a pneumatic tyre.

Vehicle tyres, which are most commonly air or gas-filled pneumatic tyres, provide static friction or frictional grip between the tyre and the surface.

It can be useful to monitor the temperature of a pneumatic tyre. For example, if the temperature of the tyre increases above a predetermined value, this can be taken as an indication of damage to the tyre. In this event, a warning signal can be provided to the driver. Typically, tyre temperature sensors are arranged and measure the temperature of the air within the pneumatic tyre. But if the temperature sensor is embedded within the tyre, the measured temperature provides direct information of the tyre material temperature. DE 101 56 776 A1 discloses an arrangement in which a temperature sensor including a transponder is embedded in the material of the pneumatic tyre. However, embedding electronic devices within the material of the tyre means that the electronic device is subjected to mechanical stress, for example due to the vehicle weight and tyre tread bending when entering and exiting of the road contact area. Moreover, sizeable electronics can be subject to early destruction due to partial crown wear.

EP 1 508 790 A1 discloses a tyre temperature sensor comprising a magnetic circuit constituting body arranged in the above portion of the tyre and forming a magnetic closed circuit, and a magnetic sensor detecting a magnetic field leaked from the magnetic circuit constituting body, in which said magnetic circuit constituting body has a characteristic of increasing a leakage magnetic field as a temperature rises in the vicinity of a predefined temperature.

US 9 417 292 B1 discloses a battery-temperature measurement system which comprises a thermomagnetic probe in a battery that includes a ferromagnetic material having a temperature-dependent magnetic permeability, a magnetic field coil to apply an alternating magnetic field in a vicinity of the thermomagnetic probe, and a magnetic permeability measurement apparatus to measure the temperature-dependent magnetic permeability.

WO 2015/083072 A1 discloses a sensor device for vehicle tyres which includes a sensing element embedded in the vehicle tyre, which has a free surface that is part of the rolling surface of the tyre tread, and which includes a ferromagnetic material and a coil having an inductance and comprising two protruding terminals. The sensor device further includes an electronic circuit installed on an inner surface of the tyre and electrically connected to the terminals, wherein the electronic circuit is configured to measure the impedance of the coil and to generate an output signal representative of the measured impedance. The electronic circuit further comprises a transponder with a wireless transmitter configured to transmit said output signal. The coil terminals are led through the tyre inner liner and steel layers and are subject to bending, making questionable air tightness and rubber endurance.

Tyre temperature sensors, systems and methods for measuring temperature of the tyre material which mitigate or overcome the above-mentioned problems is desirable.

According to the invention, a tyre temperature sensor comprises a magnetic inlay which is sized and shaped to be embedded in the tyre. The magnetic inlay has a magnetic permeability having a known temperature dependence. The temperature sensor further comprises a first coil that is sized and shaped to be arranged on an inner surface of the tyre. The first coil has a first inductance that is dependent at least in part on the magnetic permeability of the magnetic inlay. The temperature sensor further comprises an inductance measuring circuit for measuring the first inductance, means for measuring a calibration temperature of the first coil, an electronic module comprising means for calculating the temperature of the tyre based at least in part on the measured value of the first inductance of the first coil, a calibration value of the first inductance of the first coil measured at the calibration temperature and the known temperature dependence of the magnetic permeability of the magnetic inlay, and a transmitter for transmitting the output signal.

In use, the temperature of the magnetic inlay has the temperature of that part of the tyre in which it is embedded so that the magnetic inlay provides a sensor that is used to measure the local temperature of the tyre in the region of the tyre in which it is embedded. The magnetic inlay can be subject to mechanical stress and, in some embodiments, abrasion, without being prone to destruction.

In contrast, the calibration temperature is a global temperature, e.g. the temperature of the whole tyre including the magnetic inlay and the first coil that it used for calibration purposes. The calibration temperature may be measured when it is expected that the entire tyre including the magnetic inlay and the first coil has the same temperature, for example after a period of time during which the vehicle was at rest.

The tyre temperature sensor according to the invention, comprises the first coil which is suitably arranged close to the magnetic inlay, on an inner surface of the tyre, such that the magnetic inlay is within the magnetic field of the coil. The magnetic inlay has a magnetic permeability which has a known temperature dependence. For example, the magnetic permeability of the magnetic inlay may have a known linear temperature dependence. Thus, by measuring the inductance of the first coil the temperature of the region of the pneumatic tyre in which the magnetic inlay is embedded, i.e. the local temperature of the tyre in that region, can be measured. The coil is spaced apart from the magnetic inlay so that there is no physical connection between the two.

In the tyre temperature sensor according to the invention, since the first coil is arranged on an inner surface of the tyre, rather than being embedded within the tyre, the active electronic components of the sensor, which measure the inductance of the first coil, calculate the local temperature of the magnetic inlay and surrounding region of the tyre and transmit the result do not need to be embedded within the tyre.

Consequently, the electronic components are not subject to mechanical stress within the tyre material. Moreover, manufacture of a pneumatic tyre with a partially embedded sensor system may be simplified.

In the assembled condition, in some embodiments, the electronic module is arranged on the inner surface of the tyre. The electronic module may include the inductance measuring circuit for measuring the inductance of the coil, the means to measure a calibration temperature and the means to perform simple calculations. The means to measure a calibration temperature may be a temperature sensor that is positioned within the electronic module or within the gas-filed volume of the tyre. The value of the first inductance measured at the calibration temperature is a calibration value of the first inductance. They are measured at the same time, when the temperature of the magnetic inlay and first coil is expected to be the same as the temperature within the electronic module or tyre, for example after the vehicle has been at rest for a predetermined time.

The measuring first coil may lay inside or outside the electronic module. It may be a planar coil formed in a metal layer made on a printed circuit board, or may be a metal layer arranged on a substrate. In some embodiments, the substrate may be flexible.

In some embodiments, the inductance measuring circuit may be a high-resolution inductance measurement means such as an inductance to digital converter module. For example, the inductance to digital converter module LDC1612 which is commercially available from Texas Instruments may be used, as it has an extremely high resolution.

The electronic module includes means to transmit an output signal representative of the measured temperature. The output signal may be transmitted to a further unit including a receiver which is external to the tyre. The further unit may be positioned on the vehicle. The output signal may be used for providing information to the driver or an external facility, such as a maintenance facility, regarding the temperature of the tyre.

In some embodiments, the magnetic inlay comprises ferromagnetic material, for example ferromagnetic particles embedded in a rubber matrix. The rubber matrix may have a composition similar to that of the pneumatic tyre. In some embodiments, the magnetic inlay comprises ferrimagnetic material. The ferrimagnetic material may also be provided as ferrimagnetic particles embedded in a rubber matrix.

The magnetic inlay can be embedded in a region of the tyre whose temperature is to be measured, for example in a region that is more likely to suffer from localised temperature increases. A typical case would be to embed the magnetic inlay(s) in one or both of the shoulders of the tyre. In another case, the magnetic inlay is embedded it in the tyre crown. Accordingly, the coil is to be positioned on the inner surface of the tyre adjacent the magnetic inlay on the crown or shoulder region(s) above the crown.

In some embodiments, if the region of the tyre whose temperature is to be measured, such as the crown, is subject to wear, the sensor comprises a single magnetic inlay but a pair of coils. Both of the coils may be planar coils and be arranged in a stack symmetrically around the longitudinal axis of the magnetic inlay. The use of two coils assists in removing the dependence of the measured inductance values on wear of the magnetic inlay which results in abrasion and removal of the material of the magnetic inlay.

The tyre temperature sensor may be provided in the form of a kit of parts for assembling the sensor in and on a pneumatic tyre of a vehicle.

A system for measuring tyre temperature may be also provided that comprises a pneumatic tyre and a tyre temperature sensor according to any one of the embodiments described herein. The magnetic inlay is embedded in the tyre and the first coil is arranged on an inner surface of the tyre. The system may be provided in the form of a kit of parts for assembling the system in and on the pneumatic tyre of the vehicle, on the wheel rim of the vehicle and/or on the vehicle. The system may also be provided in a partially assembled or in an assembled form.

One or more of the inductance measuring circuit for measuring the inductance of the first coil and the electronic module may be arranged on an inner surface of the tyre or outside of the tyre. For example, the electronic module and/or inductance measuring circuit may be attached to the wheel rim. The means for determining the temperature may be positioned external to the electronic module, for example in a further unit positioned on the vehicle which received a signal representative of the measured inductance of the first coil.

A method of monitoring a temperature of a pneumatic vehicle tyre is also provided. The tyre comprises a magnetic inlay that is embedded in the tyre. The magnetic inlay has a magnetic permeability having a known a temperature dependence. A first coil is arranged on an inner surface of the tyre. The method comprises measuring a first inductance of the first coil arranged on an inner surface of the tyre, the value of the first inductance being dependent on the magnetic inlay embedded in the tyre, determining a temperature of the tyre based at least in part on the measured value of the first inductance, a calibration value of the first inductance of the first coil measure at a calibration temperature and the known temperature dependence of the magnetic permeability of the magnetic inlay, and transmitting an output signal representative of the determined temperature.

The magnetic inlay that is embedded in the tyre, may comprise a ferromagnetic powder with magnetic permeability having a known temperature dependence. Additionally, the coil is arranged on an inner surface of the tyre, close to the magnetic inlay, such that the value of the inductance depends on the magnetic permeability of the inlay. In some embodiments, the method comprises measuring values of the inductance of the coil and calculating the temperature of the magnetic inlay by using the known permeability of the magnetic inlay and the calibration values of temperature and coil inductance. The calculated temperature can be transmitted and received by an external unit which can generate a signal for the driver, such as a warning signal or visual signal representative of the temperature, or relay it to other vehicle control blocks for which tire temperature is meaningful.

In some embodiments, the method further comprises measuring the calibration temperature T1 and measuring a corresponding calibration value of the first inductance of the coil at this temperature. The temperature T1 may be measured using a calibration temperature sensor included in the electronic module. The calibration temperature T1 may be determined under conditions in which the tyre and the temperature sensor included in the electronic module are expected to have the same temperature, for example the ambient temperature. Such a measurement could be, for example, made at night or after the vehicle has been stationary for a predetermined period of time in which it is expected that the tyre and electronic module temperature have a temperature corresponding to the ambient temperature.

The method may further comprise determining a temperature coefficient of the magnetic permeability by measuring the inductance of the coil at a second temperature T2 using the calibration temperature sensor, the temperature T2 being different from the known temperature T1. This method may be used for embodiments in which the temperature dependence of the magnetic permeability of the magnetic inlay is linear. This embodiment enables the temperature coefficient to be measured in situ and further improve the accuracy of the temperature measurement.

In some embodiments, the method further comprises measuring the first inductance of the coil when a radial position of the ferromagnetic inlay is outside of the tyre footprint. When the magnetic inlay is within the tyre footprint, it is subjected to force due to the weight of the vehicle upon it. This can cause compression of the magnetic inlay and/or its relative position with respect to the coil, which can alter the measured value of the inductance. This situation can be avoided by measuring the first inductance of the first coil when radial position of the magnetic inlay is outside the tyre footprint when the magnetic inlay and its surroundings are not subjected to mechanical stress.

The radial position of the magnetic inlay may be determined using a sensor such as an accelerometer sensor which is provided on the wheel. Alternatively, the radial position of the magnetic inlay may be determined by determining geometry changes of the tyre using changes in the inductance of the first coil of the tyre temperature sensor. Rotation of the wheels will cause a periodic change in geometry of the magnetic inlay and consequently a periodic change in the magnetic permeability and a periodic change in the measured inductance of the first coil. These periodic changes in inductance can be distinguished from changes in the inductance caused by an increase in temperature which is not periodic.

In some embodiments, once the angular position of the temperature sensor is determined, it can be correlated with a further angular sensor of the wheel, such as the anti-lock sensor of the wheel, typically existing on modern vehicles. The radial position of the magnetic inlay can then be used as a condition for calibration, which should not be performed when the magnetic inlay is subject to mechanical stress.

In some embodiments, to correct the speed and/or pressure dependence of the geometry of the inlay versus its coil, and its measured value and calculated temperature, the method further comprises applying a speed and/or pressure correction to the measured coil inductance or the calculated temperature of the tyre.

In some embodiments, the temperature of a part of the tyre that is subject to abrasion needs to be measured. In such cases, a pair of coils can be used, possibly arranged in a stack that is symmetrically arranged about the longitudinal axis of an elongate magnetic inlay. In these embodiments, the method comprises determining the temperature of the tyre based at least in part on the measured value of the inductance of the first coil and a second inductance of the second coil. The local temperature of the tyre in the region around the magnetic inlay is determined. In these embodiments, the magnetic inlay is itself abraded such that its length changes. In order to take account of inductance changes caused by a change in length and consequently of the amount of magnetic material and a change in temperature of the inlay, the inductances of two coils are used to enable the two unknown variables to be determined.

In some embodiments, the inductance of the first and second coils is measured in two steps. A first, calibration step is used in which the inductances of both the first coil and the second coil and the temperature are measured. This first calibration step is carried out when the car is at rest and under during stable temperature conditions. The length of the inlay is calculated. In a second, working steps, the first and second inductance values are measured and temperature of the tyre around the magnetic inlay is determined based at least in part on the measured value of the first inductance and the measured value of the second inductance.

Embodiments will now be described with reference to the drawings.

Figure 1   shows a schematic cross-sectional view of a pneumatic tyre with a temperature measurement sensor according to two embodiments.

Figure 2    shows a plot of an example of magnetic permeability as a function of temperature.

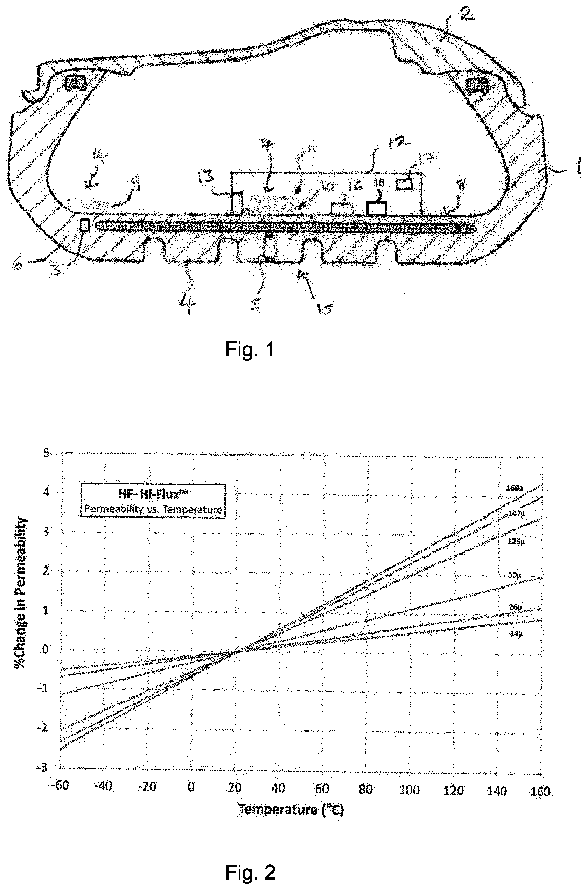

Figure 1 illustrates a cross-sectional view of a pneumatic tyre 1 attached to a wheel rim 2. In the illustrated embodiments, the tyre 1 includes two tyre temperature sensors 14, 15. However, in other embodiments, the tyre may include one or more than two tyre temperature sensors.

A first magnetic inlay 3 having the form of a rubber compound inlay containing ferromagnetic particles is embedded in the shoulder region 6 of the tyre 1. A single coil 9 is positioned on the inner surface 8 of the shoulder region 6 of tyre 1 in close proximity to the first magnetic inlay 3 such that the first magnetic inlay 3 is placed within the magnetic field of the coil 9. The magnetic inlay 3 and coil 9 provide a first tyre temperature sensor 14.

A second magnetic inlay 5 has the form of a rubber compound inlay containing ferromagnetic particles and is embedded in the tyre crown 4. A coil pair 7 is positioned on the inner surface 8 of the tyre in close proximity to the second magnetic inlay 5 such that the second magnetic inlay 5 is placed within the magnetic field of a coil pair 7. The coil pair 7 includes two planar coils 10, 11 arranged in a stack and arranged symmetrically about a longitudinal axis of the magnetic inlay 5.

The coil pair 7 and the magnetic inlay 5 provide a second tyre temperature sensor 15.

The coils 9, 10, 11 are formed of conductive material, for example, a metal and can be planar. The coils 9, 10, 11 may be formed on a substrate, for example printed on a substrate such as a printed circuit board (PCB). In some embodiments, for example a sensor for the shoulder region 6, a flexible substrate or flexible PCB can be used. The coils 9, 10, 11 may be placed inside an electronic module or unit 12, or placed outside of the electronic module 12 and connected to the electronic module 12 using wires or a flexible PCB, for example.

The electronic module 12 may include an inductance measuring circuit 13 for measuring the inductance of the coils 9, 10, 11, for example an inductance to digital device for inductivity sensing, means 18 to measure the tyre temperature for calibration, means 16 for calculating the magnetic inlay temperature from the measured inductance, for example a processor. The electronic module 12 may also comprise a transmitter 17 for transmitting an output signal that is representative of the determined temperature of the tyre 1. The output signal may be used to alert the driver or maintenance facility that the tyre temperature has increased to a predetermined threshold value.

In some embodiments, the electronic module 12 may be the wheel-fitted component of a tyre pressure monitoring system (TPMS) mounted on the inner surface of the tyre, such as a tyre pressure monitoring system such as eTIS (an electronic Tyre Information System commercially available from Continental AG) -like electronic unit. A reference temperature sensor 18 is provided in the electronics unit 12 that is used when measuring a calibration value of the first inductance of the first coil 9 or pair of coils 10, 11. The reference temperature sensor 18 is used to determine the global temperature of the tyre 1. This calibration value of the inductance of the first coil 9 or pair of coils 10, 11 at the measured calibration temperature is used by the means 16 to calculate the local temperature of the tyre 1 in the region of the pneumatic tyre 1 in which the magnetic inlay 3, 5 is embedded using the temperature sensor or sensors 14, 15.

The working temperature of the sensor 14, 15 and the tyre vulcanizing temperature should not exceed the Curie temperature of the ferromagnetic particles in the magnetic inlays 3, 5.

In Figure 1, the tyre 1 includes two temperature sensors 14, 15. However, the tyre may include a single temperature sensor or more than two temperature sensors. The temperature sensors may have the same or different constructions.

The size, shape and design of the magnetic inlay 3, 5 and the coil 9, 10, 11 can be selected according to the position of the tyre 1 whose temperature is to be monitored. For example, in some embodiments, the coil is a planar coil and the magnetic inlay 3, 5 has an elongate shape having a longitudinal axis. For example, the magnetic inlay 3, 5 may be cylindrical or have a rod shape. The coil 9, 10, 11 may be arranged symmetrically about the longitudinal axis of the magnetic inlay. This arrangement is used to maximize the influence of the magnetic inlay, and therefore its temperature, on the measured inductance of coil.

Friction of the steel belts in the tyre shoulder 6 can cause local internal heating, that can lead, in extreme cases, to tyre destruction. Excessive heating of the tyre crown 4 tends to increase tread wear and can even tear down retreads. Since the magnetic inlay 3, 5 is embedded within the pneumatic tyre 1, the temperature of specific regions inside the tyre rubber structure or of the tyre crown 4, i.e. the local temperature of the tyre, can be monitored for local internal heating and local excessive heating so as to avoid tyre destruction.

The tyre temperature is measured at locations of interest inside the shoulder 6 or in the crown tread 4 (or elsewhere) by measuring the inductance of a coil 9 or coils 10, 11 that is positioned within the magnetic field of the magnetic inlay whose magnetic permeability depends on temperature, for example depends linearly on temperature.

Figure 2 illustrates a graph of the magnetic permeability as a function of temperature for an example ferromagnetic material, for a magnetic material having different particle sizes. Figure 2 shows that there is a linear dependence of magnetic permeability on temperature for this material and that a larger particle size increases the temperature coefficient, i.e. the slope has a larger gradient. A larger gradient may be helpful in determining smaller changes in temperature.

The function of the first tyre temperature sensor 14 including a single coil 9 and the magnetic inlay 3 will now be explained.

For the first tyre temperature sensor 14, the inductance $L$ of the coil 9 depends, via the magnetic permeability $\mu$ of its magnetic inlay 3 (the ferromagnetic inlay) on temperature $T$. For a ferromagnetic material displaying a linear temperature dependence of the magnetic permeability (e.g. Fig. 2), the magnetic relative permeability $\mu_r$ can be described by:

$$\mu_r(T) = \mu_r(T_c)\ [1+k(T-T_c)],$$

therefore, the inductance $L$ of the coil 9 at some temperature $T$ can be described as:

$$L(T) = L(T_c)\ [1+k(T-T_c)],$$

where $T_c$ is a calibration temperature and $k$ is the temperature coefficient of $\mu_r$.

The sensor calibration temperature $T_c$ may be appropriately chosen, for instance at night, when the tyre is resting and the temperature of the magnetic inlay 3 is the same as the temperature of the reference temperature sensor 18 in the electronics circuit and $k$ is known from the composition and magnetic properties of the magnetic inlay 3.

By measuring an inductance value $L$ of the coil 9, the corresponding temperature $T$ of the region of the tyre 1 in which the magnetic inlay 3 is embedded can be readily calculated as

$$T = [L(T)/L(T_c)-1]/k + T_c.$$

In some embodiments, the temperature coefficient can also be learned, if a second temperature that is stable and thus measured by the electronics unit temperature sensor, $T_1$, being sufficiently different from a fist temperature $T_c$.

$$k = [L(T_1) - L(T_c)]/(T_1 - T_c)$$

For the second tyre temperature sensor 15 embedded in the crown region 4 which includes the magnetic inlay 5 and the two coils 10, 11 of the coil pair 7, the inductances $L$ of the two coils 10, 11 depend, via their common the common ferromagnetic inlay 5 magnetic permeability, on a reference temperature $T_0$ and on current temperature $T$, and on geometries, specifically on their length z, as

$$L(T,z) = L(T_0,z)\ [1+k(T-T_0)].$$

For a known material of the magnetic inlay 5 and a known geometry of the pair 7 of coils 10, 11, the temperature coefficient k and the inductance value at reference temperature $T_0$, depending on length z, $L(T_0,z)$, are known by construction or determined experimentally. We denote the inductances of coils 10, 11 as $L4, L5$:

$$L4(T,z) = L4(T_0,z)\ [1+k(T-T_0)], \qquad L5(T,z) = L5(T_0,z)\ [1+k(T-T_0)],$$

where $L4(T_0,z)$, $L5(T_0,z)$ are known by construction for a reference temperature $T_0$. By dividing the two equations:

$$L4(T,z)/L5(T,z) = L4(T_0,z)\ [1+k(T-T_0)]/L5(T_0,z)\ [1+k(T-T_0)] = L4(T_0,z)/L5(T_0,z)$$

$$L4(T,z)/L5(T,z) = L4(T_0,z)/L5(T_0,z) = f45(z)$$

This ratio no longer depends on current temperature $T$ and can be used, by the inversion of the f45(z) to determine z. The $f45^{-1}$ function, known by construction, is stored in the electronic module.

When tyre has been at rest for a while and the sensor temperature is equal to a temperature measured by the reference temperature sensor 18, $T_c$, the calibration step is performed: $L4$ and $L5$ are measured and the calibration length $z_c$ is calculated

$$z_c = f45^{-1}(L4/L5),$$

with *L4, L5* measured at $T_c$.

As the tyre abrades, the length $z_c$ diminishes in time. Therefore, calibrations need to be performed such that between two calibrations $z_c$ can be considered constant. It can then be used for temperature measurements as follows.

Knowing $z_c$ and $T_c$, the current temperature *T* is determined by measuring L4(T,z) or L5(T,z), as

$$T \cong [L4(T,z)/L4(T_c,z_c) - 1]/k + T_c$$

or similarly using L5.

In some embodiments, the magnetic inlay 3, 5 includes a ferromagnetic material, for example ferromagnetic particles embedded in a rubber matrix. In these embodiments, the magnetic inlay 3, 5 and its surroundings are flexible and when subjected to tyre deformations or strains the geometry of the ferromagnetic inlay is expected to change, leading to variations in the measured inductance value. The deformations/strains are a function of the tyre revolution.

In some embodiments, the measurements are performed when the deformations / strains are minimal, such as when the sensor 14, 15, but possibly also sensor 3, is not within the footprint (or surrounding) region of the tyre. The radial position of the sensor 14, 15, 3, i.e. of the ferromagnetic inlay and the coil arranged nearby, can be determined by using any sensor that is able to detect the footprint like an accelerometer, or the temperature sensor itself. Therefore, in some embodiments, the inductance value(s) measured at specific angles with respect to footprint, preferably at the opposite position to the footprint are used for temperature calculations.

In some embodiments, this effect can be harnessed to provide a sensor for measuring periodic geometry change caused by tyre rotations. Changes in the geometry of the magnetic inlay 3, 5 can be recognized as they are fast and periodic, whereas the changes caused by temperature are slow.

At high speeds the centrifugal force acts to increase the radius of the steel belts and tread in a tyre structure. The radius of the steel belts is kept approximately constant by the nylon overlays in the tyre structure, but the radius of the tread is free to increase (slightly). Because of the high sensitivity of the sensor 14, 15, an increase in tread (or shoulder) radius can also be perceived in the values of the inductances. Therefore, in some embodiments, the method may include a speed correction of the calculated temperature. The speed correction, caused by geometry, can be calculated, for specific tyre makes, by modelling / simulation.

In some embodiments, the sensor 14, 15 or 3 can be used as a footprint detection and footprint width measurement sensor, with the possibility to be used for load estimation, since a contraction in the z direction caused by a load results in a change in the measured inductance of the coil of the sensor 14, 15 or 3.

**Claims**

1. A tyre temperature sensor (14; 15), comprising:

    a magnetic inlay (3; 5) that is sized and shaped to be embedded in the tyre (1), wherein the magnetic inlay (3; 5) has a magnetic permeability having a known temperature dependence;
    a first coil (9; 10) that is sized and shaped to be arranged on an inner surface (8) of the tyre (1), wherein the first coil (9; 10) has a first inductance that is dependent at least in part on the magnetic permeability of the magnetic inlay (3; 5);
    an inductance measuring circuit (13) for measuring the first inductance,
    means (18) for measuring a calibration temperature of the first coil (9,10);
    an electronic module (12) comprising:

        means (16) for determining the temperature of the tyre (1) based at least in part on the measured value of the first inductance of the first coil (9; 10), a calibration value of the first inductance of the first coil (9, 10) measured at the calibration temperature and the known temperature dependence of the magnetic permeability of the magnetic inlay (3; 5), and
        a transmitter (17) for transmitting the output signal.

2. A tyre temperature sensor (14; 15) according to claim 1, wherein the inductance measuring circuit (13) comprises an inductance to digital converter module.

3. A tyre temperature sensor (14; 15) according to claim 1 or claim 2, wherein the first coil (9; 10) is arranged on or in the electronic module (12).

4. A tyre temperature sensor (14; 15) according to one of claims 1 to 3, wherein the magnetic inlay (3; 5) comprises ferromagnetic particles embedded in a rubber matrix or ferrimagnetic material.

5. A tyre temperature sensor (15) according to one of claims 1 to 4, further comprising a second coil (11) having a second inductance, wherein the first coil (10) is a planar coil and the second coil (11) is a planar coil and the first coil (10) and the second coil (12) are arranged in a stack symmetrically around an axis of the magnetic inlay (5).

6. A system for measuring a tyre temperature, the system comprising:

   a pneumatic tyre (1),
   a tyre temperature sensor (14; 15) according to one of claims 1 to 5,
   wherein the magnetic inlay (3; 5) is embedded in the tyre (1) and the first coil (9; 10) is arranged on an inner surface (8) of the tyre (1).

7. A system according to claim 6, wherein the pneumatic tyre (1) has shoulders (6) and a crown (4), wherein the magnetic inlay (3) is embedded in the shoulder (6) of the tyre (1) or the magnetic inlay (5) is embedded in the crown (4) of the tyre (1).

8. A system according to claim 6 or claim 7, wherein the electronic module (12) is arranged on an inner surface (8) of the tyre (1).

9. A method of measuring a temperature of a pneumatic vehicle tyre (1),
   wherein the tyre comprises a magnetic inlay (3; 5) embedded in the tyre (1), the magnetic inlay (3; 5) having a magnetic permeability having a known a temperature dependence and a first coil (9; 10) arranged on an inner surface (8) of the tyre (1), the method comprising:

   measuring a first inductance of the first coil (9; 10) arranged on an inner surface (8) of the tyre (1), wherein the value of the first inductance is dependent on the magnetic inlay (3; 5) embedded in the tyre (1);
   determining a temperature of the tyre (1) around the magnetic inlay (3; 5) based at least in part on the measured value of the first inductance, a calibration value of the first inductance of the first coil (9, 10) measured at the calibration temperature T1; dependence of the magnetic permeability of the magnetic inlay (3; 5);
   transmitting an output signal representative of the determined temperature.

10. A method according to claim 9, further comprising measuring the calibration tyre temperature T1 using a reference temperature sensor (18) and measuring a corresponding calibration value of the inductance of the first coil (9; 10) at that temperature.

11. A method according to claim 10, wherein the temperature dependence of the magnetic permeability of the magnetic inlay (3; 5) is linear and the method further comprises:
    determining a temperature coefficient of the magnetic permeability by measuring the inductance of the first coil (9; 10) at a second temperature T2 using the reference temperature sensor, the second temperature T2 being different from T1.

12. A method according to one of claims 9 to 11, wherein the first inductance of the first coil (9; 10) is measured when a radial position of the magnetic inlay (3; 5) is outside of the tyre footprint.

13. A method according to claim 12, further comprising determining the radial position of the magnetic inlay (3; 5) by using an additional accelerometer sensor or by determining geometry changes of the tyre (1) using changes in the first inductance of the first coil (9; 10).

14. A method according to one of claims 9 to 13, further comprising applying a speed correction to the determined temperature of the tyre.

15. The method of one of claims 9 to 14, wherein

the magnetic inlay (5) comprises an axis that is substantially perpendicular to a rolling surface of the tyre (1);
the sensor (15) comprises a first coil (10) having a first inductance and a second coil (11) having a second inductance;
the first coil (10) and the second coil (11) are planar coils and are arranged in a stack symmetrically around the axis of the magnetic inlay (5), wherein the first inductance and the second inductance are dependent at least in part on the magnetic inlay (5), the method further comprising:

measuring the inductances of the first and second coils (10; 11), and
determining the temperature of the tyre (1) based at least in part on the measured value of the first inductance and the measured value of the second inductance.

**Patentansprüche**

1. Reifentemperatursensor (14; 15), umfassend:

eine magnetische Einlage (3; 5), die so bemessen und geformt ist, dass sie in den Reifen (1) eingebettet werden kann, wobei die magnetische Einlage (3; 5) eine magnetische Permeabilität mit einer bekannten Temperaturabhängigkeit aufweist;
eine erste Spule (9; 10), die so bemessen und geformt ist, dass sie auf einer Innenfläche (8) des Reifens (1) angeordnet werden kann, wobei die erste Spule (9; 10) eine erste Induktivität aufweist, die zumindest teilweise von der magnetischen Permeabilität der magnetischen Einlage (3; 5) abhängt;
eine Induktivitätsmessschaltung (13) zum Messen der ersten Induktivität,
Mittel (18) zum Messen einer Kalibrierungstemperatur der ersten Spule (9; 10);
ein elektronisches Modul (12), umfassend:

Mittel (16) zum Bestimmen der Temperatur des Reifens (1) zumindest teilweise basierend auf dem gemessenen Wert der ersten Induktivität der ersten Spule (9; 10), eines Kalibrierungswerts der ersten Induktivität der ersten Spule (9; 10), der bei der Kalibriertemperatur gemessen wird, und der bekannten Temperaturabhängigkeit der magnetischen Permeabilität der magnetischen Einlage (3; 5), und
einen Sender (17) zum Übertragen des Ausgangssignals.

2. Reifentemperatursensor (14; 15) nach Anspruch 1, wobei die Induktivitätsmessschaltung (13) ein Induktivität-Digital-Wandlermodul umfasst.

3. Reifentemperatursensor (14; 15) nach Anspruch 1 oder Anspruch 2, wobei die erste Spule (9; 10) auf oder in dem elektronischen Modul (12) angeordnet ist.

4. Reifentemperatursensor (14; 15) nach einem der Ansprüche 1 bis 3, wobei die magnetische Einlage (3; 5) ferromagnetische Partikel umfasst, die in eine Kautschukmatrix oder in ferromagnetischem Material eingebettet sind.

5. Reifentemperatursensor (15) nach einem der Ansprüche 1 bis 4, ferner umfassend eine zweite Spule (11), die eine zweite Induktivität aufweist, wobei die erste Spule (10) eine planare Spule ist und die zweite Spule (11) eine planare Spule ist und die erste Spule (10) und die zweite Spule (12) in einem Stapel symmetrisch um eine Achse der magnetischen Einlage (5) angeordnet sind.

6. System zum Messen einer Reifentemperatur, das System umfassend:

einen Luftreifen (1),
einen Reifentemperatursensor (14; 15) nach einem der Ansprüche 1 bis 5,
wobei die magnetische Einlage (3; 5) in den Reifen (1) eingebettet ist und die erste Spule (9; 10) auf einer Innenfläche (8) des Reifens (1) angeordnet ist.

7. System nach Anspruch 6, wobei der Luftreifen (1) Schultern (6) und einen Scheitel (4) aufweist, wobei die magnetische Einlage (3) in die Schulter (6) des Reifens (1) eingebettet ist oder die magnetische Einlage (5) in den Scheitel (4) des Reifens (1) eingebettet ist.

8. System nach Anspruch 6 oder Anspruch 7, wobei das elektronische Modul (12) auf einer Innenfläche (8) des Reifens (1) angeordnet ist.

9. Verfahren zum Messen einer Temperatur eines Fahrzeugluftreifens (1), wobei der Reifen eine magnetische Einlage (3; 5) umfasst, die in den Reifen (1) eingebettet ist, die magnetische Einlage (3; 5) eine magnetische Permeabilität mit einer bekannten Temperaturabhängigkeit aufweist und eine erste Spule (9; 10) auf einer Innenfläche (8) des Reifens (1) angeordnet ist, das Verfahren umfassend:

Messen einer ersten Induktivität der ersten Spule (9; 10), die auf einer Innenfläche (8) des Reifens (1) angeordnet ist, wobei der Wert der ersten Induktivität von der magnetischen Einlage (3; 5) abhängt, die in dem Reifen (1) eingebettet ist;
Bestimmen einer Temperatur des Reifens (1) um die magnetische Einlage (3; 5) zumindest teilweise basierend auf dem gemessenen Wert der ersten Induktivität, eines Kalibrierungswerts der ersten Induktivität der ersten Spule (9; 10), der bei der Kalibriertemperatur T1 gemessen wird und die Abhängigkeit von der magnetischen Permeabilität der magnetischen Einlage (3; 5);
Übertragen eines Ausgangssignals, das die bestimmte Temperatur darstellt.

10. Verfahren nach Anspruch 9, ferner umfassend das Messen der Kalibrierungsreifentemperatur T1 unter Verwendung eines Referenztemperatursensors (18) und das Messen eines entsprechenden Kalibrierungswerts der Induktivität der ersten Spule (9; 10) bei dieser Temperatur.

11. Verfahren nach Anspruch 10, wobei die Temperaturabhängigkeit der magnetischen Permeabilität der magnetischen Einlage (3; 5) linear ist und das Verfahren ferner umfasst:
Bestimmen eines Temperaturkoeffizienten der magnetischen Permeabilität durch Messen der Induktivität der ersten Spule (9; 10) bei einer zweiten Temperatur T2 unter Verwendung des Referenztemperatursensors, wobei die zweite Temperatur T2 sich von T1 unterscheidet.

12. Verfahren nach einem der Ansprüche 9 bis 11, wobei die erste Induktivität der ersten Spule (9; 10) gemessen wird, wenn eine radiale Position der magnetischen Einlage (3; 5) außerhalb der Bodenaufstandsfläche liegt.

13. Verfahren nach Anspruch 12, ferner umfassend das Bestimmen der radialen Position der magnetischen Einlage (3; 5) unter Verwendung eines zusätzlichen Beschleunigungssensors oder das Bestimmen von Geometrieänderungen des Reifens (1) unter Verwendung von Änderungen der ersten Induktivität der ersten Spule (9; 10).

14. Verfahren nach einem der Ansprüche 9 bis 13, ferner umfassend das Anwenden einer Geschwindigkeitskorrektur auf die bestimmte Temperatur des Reifens.

15. Verfahren nach einem der Ansprüche 9 bis 14, wobei die magnetische Einlage (5) eine Achse umfasst, die im Wesentlichen senkrecht zu einer Lauffläche des Reifens (1) verläuft;

der Sensor (15) eine erste Spule (10), die eine erste Induktivität aufweist, und eine zweite Spule (11), die eine zweite Induktivität aufweist, umfasst;
die erste Spule (10) und die zweite Spule (11) planare Spulen sind und in einem Stapel symmetrisch um die Achse der magnetischen Einlage (5) angeordnet sind, wobei die erste Induktivität und die zweite Induktivität zumindest teilweise von der magnetischen Einlage (5) abhängig sind, das Verfahren ferner umfassend:
Messen der Induktivitäten der ersten und zweiten Spule (10; 11), und Bestimmen der Temperatur des Reifens (1) zumindest teilweise basierend auf dem Messwert der ersten Induktivität und dem Messwert der zweiten Induktivität.

**Revendications**

1. Capteur de température (14 ; 15) de pneu, comprenant :

une incrustation magnétique (3 ; 5) dimensionnée et mise en forme pour être intégrée dans le pneu (1), l'incrustation magnétique (3 ; 5) ayant une perméabilité magnétique ayant une dépendance à la température connue ;
une première bobine (9 ; 10) dimensionnée et mise en forme pour être agencée sur une surface interne (8) du pneu (1), la première bobine (9 ; 10) ayant une première inductance qui dépend au moins en partie de la perméabilité magnétique de l'incrustation magnétique (3 ; 5) ;
un circuit de mesure d'inductance (13) pour mesurer la première inductance,
des moyens (18) de mesure d'une température d'étalonnage de la première bobine (9, 10) ;
un module électronique (12) comprenant :

des moyens (16) de détermination de la température du pneu (1) sur la base au moins en partie de la valeur mesurée de la première inductance de la première bobine (9 ; 10), d'une valeur d'étalonnage de la première inductance de la première bobine (9, 10) mesurée à la température de calibration et de la dépendance à la température connue de la perméabilité magnétique de l'incrustation magnétique (3 ; 5), et
un émetteur (17) pour transmettre le signal de sortie.

2. Capteur de température (14 ; 15) de pneu selon la revendication 1, le circuit de mesure d'inductance (13) comprenant un module convertisseur inductance-numérique.

3. Capteur de température (14 ; 15) de pneu selon la revendication 1 ou la revendication 2, la première bobine (9 ; 10) étant agencée sur ou dans le module électronique (12).

4. Capteur de température (14 ; 15) de pneu selon l'une des revendications 1 à 3, l'incrustation magnétique (3 ; 5) comprenant des particules ferromagnétiques intégrées dans une matrice caoutchouc ou dans un matériau ferromagnétique.

5. Capteur de température (15) de pneu selon l'une des revendications 1 à 4, comprenant en outre une deuxième bobine (11) ayant une deuxième inductance, la première bobine (10) étant une bobine plane et la deuxième bobine (11) étant une bobine plane et la première bobine (10) et la deuxième bobine (12) étant agencées en une pile symétriquement autour d'un axe de l'incrustation magnétique (5).

6. Système pour mesurer une température de pneu, le système comprenant :

un pneu (1) pneumatique,
un capteur de température (14 ; 15) de pneu selon l'une des revendications 1 à 5,
l'incrustation magnétique (3 ; 5) étant intégrée dans le pneu (1) et la première bobine (9 ; 10) étant agencée sur une surface interne (8) du pneu (1).

7. Système selon la revendication 6, le pneu (1) pneumatique ayant des épaulements (6) et un sommet (4), l'incrustation magnétique (3) étant intégrée dans l'épaulement (6) du pneu (1) ou l'incrustation magnétique (5) étant intégrée dans le sommet (4) du pneu (1).

8. Système selon la revendication 6 ou la revendication 7, le module électronique (12) étant agencé sur une surface interne (8) du pneu (1).

9. Procédé de mesure d'une température d'un pneu (1) de véhicule pneumatique, le pneu comprenant une incrustation magnétique (3 ; 5) intégrée dans le pneu (1), l'incrustation magnétique (3 ; 5) ayant une perméabilité magnétique ayant une dépendance à la température connue et une première bobine (9 ; 10) agencée sur une surface interne (8) du pneu (1), le procédé comprenant :

la mesure d'une première inductance de la première bobine (9 ; 10) agencée sur une surface interne (8) du pneu (1), la valeur de la première inductance dépendant de l'incrustation magnétique (3 ; 5) intégrée dans le pneu (1) ;
la détermination d'une température du pneu (1) autour de l'incrustation magnétique (3 ; 5) sur la base au moins en partie de la valeur mesurée de la première inductance, d'une valeur d'étalonnage de la première inductance de la première bobine (9, 10) mesurée à la température T1 de calibration et la dépendance de la perméabilité magnétique de l'incrustation magnétique (3 ; 5) ;
l'émission d'un signal de sortie représentatif de la température déterminée.

10. Procédé selon la revendication 9, comprenant en outre la mesure de la température T1 de pneu d'étalonnage en utilisant un capteur de température de référence (18) et la mesure d'une valeur d'étalonnage correspondante de l'inductance de la première bobine (9 ; 10) à cette température.

**11.** Procédé selon la revendication 10, la dépendance à la température de la perméabilité magnétique de l'incrustation magnétique (3 ; 5) étant linéaire et le procédé comprenant en outre :
la détermination d'un coefficient de température de la perméabilité magnétique en mesurant l'inductance de la première bobine (9 ; 10) à une deuxième température T2 en utilisant le capteur de température de référence, la deuxième température T2 étant différente de T1.

**12.** Procédé selon l'une des revendications 9 à 11, la première inductance de la première bobine (9 ; 10) étant mesurée lorsqu'une position radiale de l'incrustation magnétique (3 ; 5) est en dehors de l'aire de contact de pneu.

**13.** Procédé selon la revendication 12, comprenant en outre la détermination de la position radiale de l'incrustation magnétique (3 ; 5) en utilisant un capteur accéléromètre additionnel ou en déterminant des changements de géométrie du pneu (1) en utilisant des changements de la première inductance de la première bobine (9 ; 10).

**14.** Procédé selon l'une des revendications 9 à 13, comprenant en outre l'application d'une correction de vitesse à la température du pneu déterminée.

**15.** Procédé selon l'une des revendications 9 à 14,

l'incrustation magnétique (5) comprenant un axe sensiblement perpendiculaire à une surface de roulement du pneu (1) ;
le capteur (15) comprenant une première bobine (10) ayant une première inductance et une deuxième bobine (11) ayant une deuxième inductance ;
la première bobine (10) et la deuxième bobine (11) étant des bobines planes et étant agencées en une pile symétriquement autour de l'axe de l'incrustation magnétique (5), la première inductance et la deuxième inductance dépendant au moins en partie de l'incrustation magnétique (5), le procédé comprenant en outre :

la mesure des inductances des première et deuxième bobines (10 ; 11), et
la détermination de la température du pneu (1) sur la base au moins en partie de la valeur mesurée de la première inductance et de la valeur mesurée de la deuxième inductance.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10156776 A1
- EP 1508790 A1
- US 9417292 B1
- WO 2015083072 A1